# EUROPEAN PATENT APPLICATION

(11) **EP 2 631 702 A2**
(43) Date of publication of application: **28.08.2013**
(21) Application number: 11834674.1
(22) Date of filing: 24.10.2011
(51) Int. Cl.: G02B 27/26, H04N 13/00

(54) **STEREOSCOPIC DISPLAY SYSTEM, GLASSES USED FOR THE SYSTEM, AND DISPLAY METHOD THEREFOR**

(30) Priority: 22.10.2010 US 405775 P
(71) Applicant: Samsung Electronics Co., Ltd, Gyeonggi-do 443-742 (KR)
(72) Inventor: SHESTAK, Sergey, Suwon-si Gyeonggi-do 443-744 (KR); KIM, Dae-sik, Hwaseong-si Gyeonggi-do 445-753 (KR)
(74) Representative: Hewett, Jonathan Michael Richard
(86) International application number: PCT/KR2011/007941
(87) International publication number: WO 2012/053874

(57) **Abstract**

A stereoscopic display system, eyeglasses for viewing a stereoscopic image, and a display method thereof are provided. The stereoscopic display system includes: a display apparatus in which first and second pixel elements are alternately arranged, wherein the first pixel element emits a ray of a left eye image in a first polarization direction, and the second pixel element emits a ray of a right eye image in a second polarization direction; and eyeglasses which include left and right eye filters. The eyeglasses include: a polarizer which separates the rays of the left and right eye images from each other; a polarization switch which switches a polarization direction of a ray; a double refractor which shifts a visible position of a pixel according to a polarization state of the ray switched by the polarization switch; and a controller which operates with an operation of the display apparatus to control the polarization switch. Therefore, a user views a stereoscopic image having a full resolution.

## Description

This application claims priority under 35 U.S.C. § 119 from U.S. Patent Application No. 61/405,775, filed on October 22, 2010, in the United States Patent and Trademark Office, the disclosure of which is incorporated herein by reference in its entirety.

The present general inventive concept generally relates to a stereoscopic display system, eyeglasses for viewing a stereoscopic image, and a display method thereof, and more particularly, to a stereoscopic display system which displays a stereoscopic image with maintaining a resolution, eyeglasses for viewing a stereoscopic image, and a display method thereof.

The recent development of electronic technologies has brought the development and supply of various types of electronic devices. In particular, a display apparatus, such as a TV which is one of home appliances used the most in general homes, has been rapidly developed for recent several years.

Types of contents displayed on a display apparatus have been variously increased with the advancement of performance of the display apparatus. In particular, a stereoscopic display system through which ₃-dimensional (₃D) contents can also be viewed has been developed and supplied.

The stereoscopic display system may be greatly classified into a non-eyeglasses type system through which a viewer can view contents without eyeglasses and an eyeglasses type system through which the viewer can view contents with eyeglasses. The viewer can view a ₃D image without eyeglasses through the non-eyeglasses type system. However, an image quality is low, and a stereoscopic effect varies with a position of the viewer. Therefore, the eyeglasses type system is currently generally used.

The eyeglasses type system is classified into a polarization type and a shutter glass type according to kinds of eyeglasses.

The polarization type refers to a method by which polarization directions of left and right eye glasses are differently realized, and polarization directions of left and right eye images are also differently realized so that the left eye image is recognized by a left eye of a user through the left eyeglass, and the right eye image is recognized by a right eye of the user through the right eyeglass. Therefore, the user can feel a stereoscopic effect according to a disparity between the left and right eye images.

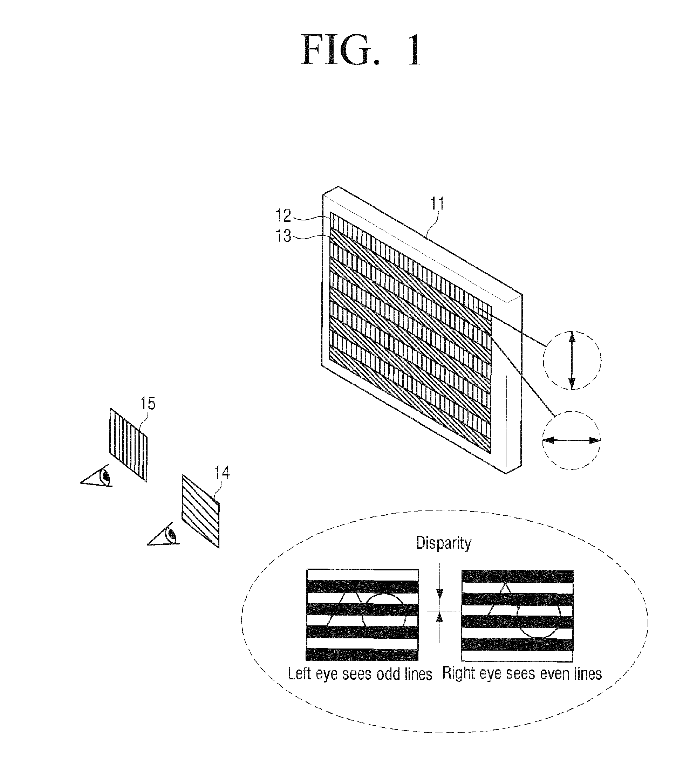

FIG. 1 is a view illustrating a structure and an operation of a conventional polarization type system. Referring to FIG. 1, an image panel 11 includes a plurality of cells which are arranged in columns and rows. The image panel 11 outputs a frame formed of a combination of left and right eye images. Each of the cells of the image panel 11 displays each of pixel of the frame. Odd lines 12 of the image panel 11 output a ray polarized in a first direction (in a vertical direction in FIG. 1), and even lines 14 of the image panel 11 output a ray polarized in a second direction (in a horizontal direction in FIG. 1). The left eye image is displayed in the odd lines 12, and the right eye image is displayed in the even lines 12.

A viewer is to wear eyeglasses which include a plurality of filters 14 and 15 respectively transmitting a horizontally polarized ray and a vertically polarized ray. Therefore, a left eye of the viewer recognizes an image of vertically polarized odd lines, i.e., a left eye image, and a right eye of the viewer recognizes an image of horizontally polarized even lines, i.e., a right eye image. As a result, the viewer feels a stereoscopic effect due to a disparity between the left and right eye images.

However, in the conventional polarization type system of FIG. 1, half of the left eye image and half of the right eye image are recognized by a user. Therefore, a resolution is reduced to half, and thus an image quality is lowered.

The shutter glass type refers to a method by which left and right eye images are alternately output, and their output timings synchronize with each other in order to alternately turn on left and right eye glasses of eyeglasses.

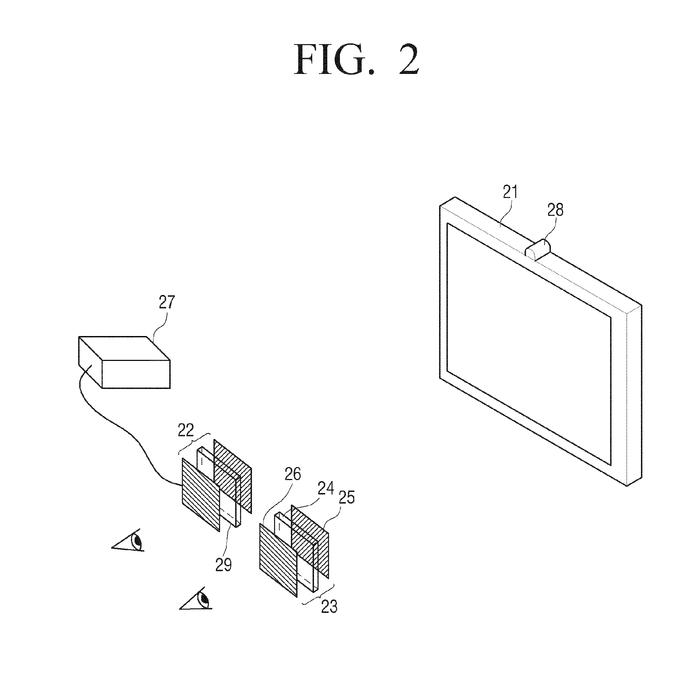

FIG. 2 is a view illustrating a structure of a shutter glass type stereoscopic display system. Referring to FIG. 2, a display panel 21 alternately displays left and right eye images. The display panel 21 outputs a sync signal by using a transmitter 28.

A user is to view the display panel 21 with eyeglasses including left and right eye glasses. The left eye glass includes a left eye filter 22, and the right eye glass includes a right eye filter 23.

The left and right eye filters 22 and 23 respectively include two polarizers 25 and 26 and polarization switches 24 and 29. The polarization switches 24 and 29 may include cells such as liquid crystals.

A controller 27 of the eyeglasses controls the left and right filters 22 and 23 according to the sync signal output from the transmitter 28. In detail, the controller 27 may apply an electric signal to the polarization switches 24 and 29 to selectively switch polarization states of the left and right eye filters 22 and 23. In other words, the controller 27 opens the left eye glass and closes the right eye glass when the left eye image is displayed but opens the right eye glass and closes the left eye glass when the right eye image is displayed. Therefore, the left eye image is recognized by a left eye of the user, and the right eye image is recognized by a right eye of the user. As a result, the user feels a stereoscopic effect.

However, the shutter glass type stereoscopic display system may cause crosstalk due to low response speed and image refresh. Therefore, a part of the right eye image is recognized by the left eye of the user, and a part of the left eye image is recognized by the right eye of the user. As a result, the user feels dizzy.

Accordingly, a method of reducing crosstalk and maintaining an original resolution is required.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a stereoscopic display system through which a viewer can view a full resolution ₃-dimensional (₃D) image with low crosstalk between images, eyeglasses used in the stereoscopic display system, and a display method thereof.

According to an aspect of the exemplary embodiments, there is provided a stereoscopic display system including: a display apparatus in which first and second pixel elements are alternately arranged, wherein the first pixel element emits a ray of a left eye image in a first polarization direction, and the second pixel element emits a ray of a right eye image in a second polarization direction; and eyeglasses which comprise left and right eye filters. The eyeglasses may include: a polarizer which separates the rays of the left and right eye images from each other; a polarization switch which switches a polarization direction of a ray; a double refractor which shifts a visible position of a pixel according to a polarization state of the ray switched by the polarization switch; and a controller which operates with an operation of the display apparatus to control the polarization switch.

The double refractor may include at least one plano-parallel plate which is formed of a birefringent material and has a preset thickness.

The double refractor may include at least one wedge which is formed of a birefringent material and has a preset angle.

The double refractor may include a combination of at least one or more optical wedges. At least one of the combined optical wedges may be formed of a birefringent material.

The double refractor may include at least one Rochon prism.

The display apparatus may include: a display panel; and a polarization modifying panel which has a preset structure to change a polarization direction.

The polarization modifying panel may include a patterned retarder.

The polarization modifying panel may include a patterned polarizer.

The polarization modifying panel may include a structure in which horizontally extending lines are uniformly distributed.

The polarization modifying panel may include a structure in which vertically extending lines are uniformly distributed.

The polarization modifying panel may include a checkerboard structure.

The polarization modifying panel may include a checkerboard structure which is rotated 45° to have a diamond shape.

The display panel may perform a black frame inserting operation.

The display panel may perform a backlight scanning operation.

The polarizer may include first and second polarizers which are respectively installed in the left and right eye filters to transmit rays of different polarization directions. The polarization switch may include first and second polarization switches which are respectively installed in the left and right eye filters to respectively adjust polarization directions of rays penetrating the first and second polarizers. The double refractor may include first and second double refractors which are respectively installed in the left and right eye filters to refract or transmit rays penetrating the first and second polarization switches according to polarization directions.

The first and second polarization switches may respectively include retarders which are electrically controllable.

The first and second polarization switches may include a retarder which is commonly used for left and right eyes and is electrically controllable.

The first and second polarization switches may include a retarder which is commonly used for left and right eyes and is electrically controllable. The retarder may include a common electrode and two individual electrodes.

The first and second polarization switches may respectively include liquid crystal cells which are electrically controllable.

According to another aspect of the exemplary embodiments, there is provided a display method of a stereoscopic display system using eyeglasses comprising left and right eye glasses. The display method may include: generating first and second frames in which left and right eye images are alternately arranged and sequentially displaying the first and second frames; and controlling a polarization switch of the eyeglasses according to a display timing of the first and second frames to refract or transmit rays through the left and right eye glasses so that a left eye of a user recognizes a ray of left eye images of the first and second frames, and a right eye of the user recognizes a ray of right eye images of the first and second frames.

According to another aspect of the exemplary embodiments, there is provided eyeglasses for viewing a stereoscopic image. The eyeglasses may include: first and second polarizers which transmit rays of different polarization directions; first and second double refractors which respectively adjust refracted states of the rays having penetrated the first and second polarizers to shift visible positions of pixels; first and second polarization switches which switch states of the first and second double refractors; anda controller which operates with an operation of the display apparatus to control the first and second polarization switches.

The first and second double refractors may each include at least one plano-parallel plate which is formed of a birefringent material and has a preset thickness.

The first and second double refractors may each include a wedge which is formed of a birefringent material and has a preset angle.

The first and second double refractors may each include at least one Rochon prism.

The first and second polarization switches may respectively include retarders which are electrically controllable.

The first and second polarization switches may include a retarder which is commonly used for left and right eyes and is electrically controllable.

The first and second polarization switches may include a retarder which is commonly used for left and right eyes and is electrically controllable. The retarder may include a common electrode and two individual electrodes.

The first and second polarization switches may respectively include liquid crystal cells which are electrically controllable.

The above and/or other aspects will be more apparent by describing certain exemplary embodiments with reference to the accompanying drawings, in which:
FIGS. 1 and 2 are views illustrating structures and operations of conventional stereoscopic display systems;
FIG. 3 is a view illustrating a structure and an operation of a stereoscopic display system according to an exemplary embodiment of the present general inventive concept;
FIG. 4 is a view illustrating an operation of a double refractor;
FIG. 5 is a view illustrating display patterns of the stereoscopic display system, according to an exemplary embodiment of the present general inventive concept;
FIG. 6 is a view illustrating a method of constituting frames in the stereoscopic display system, according to an exemplary embodiment of the present general inventive concept;
FIG. 7 is a view illustrating a form of an image recognized by a user;
FIGS. 8 and 9 are views illustrating a detailed structure of the stereoscopic display system, according to an exemplary embodiment of the present general inventive concept;
FIG. 10 is a view illustrating an operation of a left eye filter;
FIG. 11 is a view illustrating an operation of a right eye filter;
FIGS. 12 through 14 are views illustrating eyeglasses to which polarization switches having various structures are applied;
FIGS. 15 through 18 are views illustrating various types of polarization patterns;
FIGS. 19 and 20 are views illustrating arrangements of elements of eyeglasses for horizontally and diagonally shifting images;
FIGS. 21 through 25 are views illustrating various types of double refractors;
FIG. 26 is a view illustrating an operation of eyeglasses including an angular double refractive element;
FIGS. 27 and 28 are views illustrating an operation of a double refractor using a double refractive prism; and
FIG. 29 is a view illustrating a structure of a double refractor having a controllable refraction angle.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

FIG. ₃ is a view illustrating a structure and an operation of a stereoscopic display system according to an exemplary embodiment of the present general inventive concept. Referring to FIG. ₃, the stereoscopic display system includes a display apparatus 100 and eyeglasses 200.

The display apparatus 100 includes an image panel 101 and a signal transmitter 111. The display apparatus 100 may be an apparatus having various forms such as a TV, a monitor, a notebook PC, a tablet PC, a portable phone, an electronic frame, an electronic book, etc.

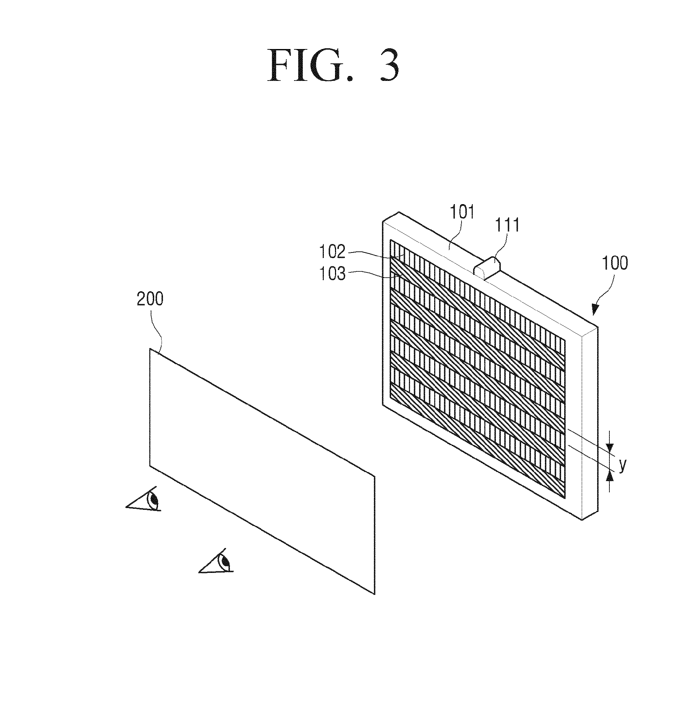

The image panel 101 includes two types of picture elements 102 and 103 which horizontally extend. The two types of picture elements 102 and 103 of FIG. 3 are expressed as different hatchings in FIG. 3. The two types of picture elements 102 and 103 emit rays in orthogonal polarization directions. In the present specification, the orthogonal polarization directions are referred to as first and second polarization directions. The two types of picture elements 102 and 103 are alternately arranged in a vertical direction in FIG. 3, but this is only an exemplary embodiment. Therefore, the two types of picture elements 102 and 103 may be realized in different forms. For example, the two types of picture elements 102 and 103 may extend in a vertical direction. In this case, the two types of picture elements 102 and 103 may be alternately arranged in a horizontal direction.

The two types of picture elements 102 and 103 output different types of images. In other words, if the picture element 102 of an odd line outputs a left eye image, the picture element 103 of an even line outputs a right eye image. The opposite case is possible.

The picture elements 102 and 103 may be formed of lines of liquid crystal display (LCD), field emission display (FED), or organic light-emitting diode (OLED) panel pixels which are covered with a polarized crystal layer. The polarized crystal layer may be realized as a patterned polarizer or a patterned retardation plate or film. The polarized crystal layer includes linear structural patterns so that the rays emitted from the two types of picture elements 102 and 103 have different polarization directions. In other words, an image originally output from the image panel 101 may be unpolarized or linearly polarized but penetrates the polarized crystal layer to have two polarization directions orthogonal to each other, i.e., the first and second polarization directions. The first and second polarization directions may be linear polarizations which are orthogonal to each other in vertical and horizontal directions or in directions of 45° and 135° or circular polarizations such as left-circular and right-circular directions. A structure of the polarized crystal layer will be described later.

The signal transmitter 111 outputs a sync signal which is to synchronize a display timing of the image panel 101 with an operation timing of the eyeglasses 200. The sync signal may be realized as an infrared signal. The signal transmitter 111 is included in FIG. 3, but the sync signal may be transmitted to the eyeglasses 200 through a cable line.

A user is to wear the eyeglasses 200 in order to stereoscopically view an image displayed on the image panel 101. The eyeglasses 200 include left and right eye glasses. The left eye glass includes a left eye filter, and the right eye glass includes a right eye filter.

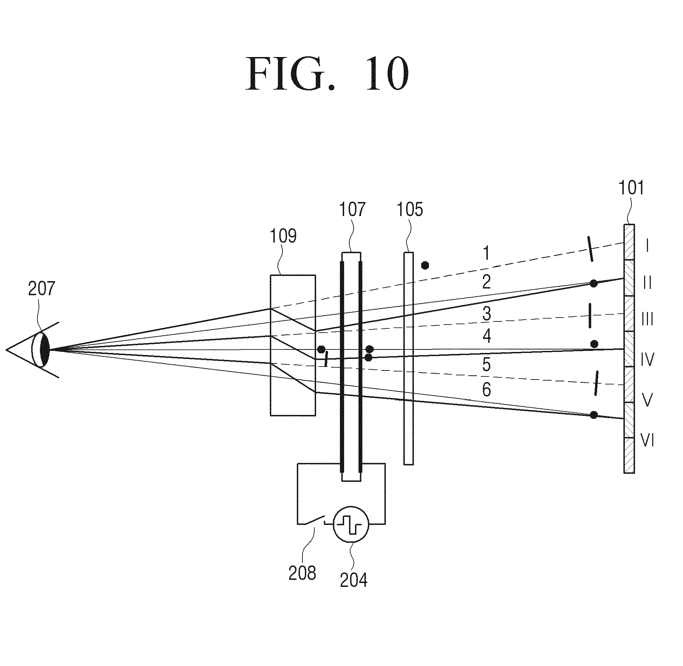

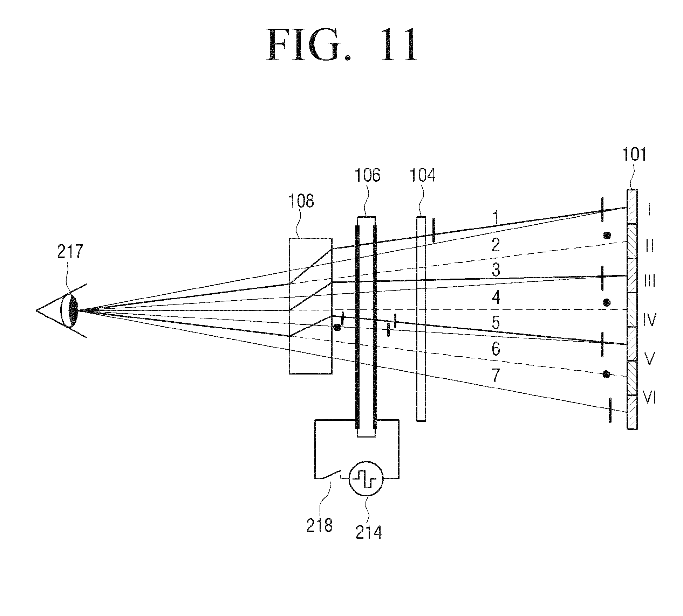

As shown in FIGS. 10 and 11, the left eye filter includes a first polarizer 105, a first polarization switch 107, and a first double refractor 109. The right eye filter includes a second polarizer 104, a second polarization switch 106, and a second double refractor 108.

If a linearly polarized ray or a circularly polarized ray is incident, the first and second polarizers 105 and 104 transmit only rays of polarization directions respectively corresponding to the first and second polarizers 105 and 104. The first and second polarizers 105 and 014 may be realized as linear polarizers or circular polarizers. A ray which has penetrated the first and second polarizers 105 and 104 is linearly polarized. Therefore, a left eye of the user may view only one of the two types of picture elements 102 and 103, and a right eye of the user may view only the other one of the two types of picture elements 102 and 103.

The first and second polarization switches 107 and 106 may electrically control optical retardance. In other words, even if a ray incident onto the first and second polarization switches 107 and 106 has a constant polarization direction, the ray may have the first or second polarization direction due to switching operations of the first and second polarization switches 107 and 106. Structures of the first and second polarization switches 107 and 106 will be described in detail later.

A ray penetrating the first and second polarization switches 107 and 106 is incident onto the first and second double refractors 109 and 108. The first and second double refractors 109 and 108 output the incident ray as it is or refract and output the incident ray according to a polarization direction of the incident ray.

If the ray is refracted by the first and second double refractors 109 and 108, visible positions of pixels are shifted. The first and second double refractors 109 and 108 may shift the ray linearly or at a predetermined angle. This shift may be performed along a plane which is kept at a predetermined distance or is inclined vertically, horizontally, or at a predetermined angle. According to various exemplary embodiments, the first and second double refractors 109 and 108 may be realized as plano-parallel plates which are formed of a birefringent material such as calcite, lithium niobate, yttrium ortho-vanadate (YVO4), or the like. The plano-parallel plates may be arranged to be separated from each other so as to form a first linear polarization ray through an ordinary ray and form a second linear polarization ray through an extraordinary ray. A double refractive plate having similar property to the plano-parallel plates may be referred to as a beam displacer. The ordinary ray penetrates a double refractive plate in a direction in which the ordinary ray has penetrated an isotropic optical plate. The extraordinary ray is paratactically shifted and penetrated. The double refractive plate may be designed so that a shift between the ordinary ray and the extraordinary ray is equal to a distance (pitch) between two pixel elements. Visible positions of pixel elements may be shifted or unshifted by one line pitch according to a polarization direction of a ray scanned from each of the pixel elements.

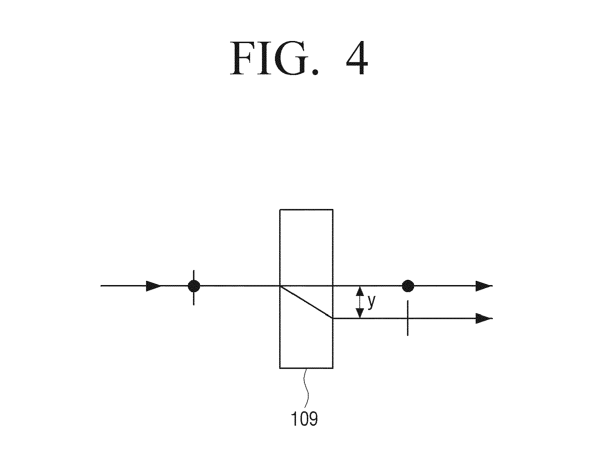

FIG. 4 is a view illustrating a refracted state of a ray incident onto a first double refractor. Referring to FIG. 4, a ray of a first polarization direction (marked with " |") is refracted through the first double refractor 109 to be output as a parallel ray keeping a distance of y from the ray of the first polarization direction. A ray of a second polarization direction (marked with "●") penetrates the first double refractor 109.

As the first and second polarization switches 107 and 106 change polarization directions, rays penetrating the first and second double refractors 109 and 108 disposed in the back of the first and second polarization switches 107 and 106 are output as they are or are refracted and output. Therefore, visible positions of pixels which can be viewed by a user are changed with respect to pixels of an image displayed on the display apparatus 100.

The controller 110 controls the first and second polarization switches 107 and 106 according to the sync signal transmitted from the signal transmitter 111 of the display apparatus 100, so that a left eye image is always recognized by a left eye of the user, and a right eye image is always recognized by a right eye of the user.

In FIG. 4, a refracted ray is output as a parallel ray. However, the refracted ray may be output to have a predetermined angle with a penetrating ray according to materials and structures of double refractors.

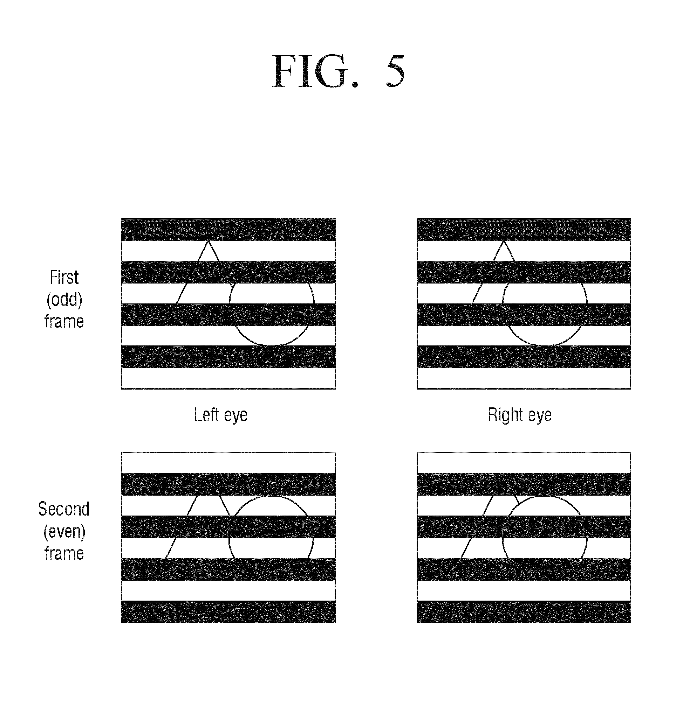

FIG. 5 is a view illustrating a method of constituting frames of the display apparatus 100 according to an exemplary embodiment of the present general inventive concept.

In order to provide a full resolution stereoscopic image, the display apparatus 100 combines left and right eye images to constitute and output a plurality of sequential frames.

In the exemplary embodiment of FIG. 5, the display apparatus 100 combines even lines of the left eye image and even lines of the right eye image to constitute a first frame and combines odd lines of the left eye image and odd lines of the right eye image to constitute a second frame.

The display apparatus 100 sequentially displays the first and second frames.

A viewer views rays of different polarization directions, which are respectively emitted from odd and even lines emitted from the display panel 101, through the left and right eye glasses of the eyeglasses 200.

When the first frame is displayed, the controller 110 applies a driving signal to the first and second polarization switches107 and 106 not to change polarization directions of rays. The first and second double refractors 109 and 108 refract a ray of a first polarization direction to shift a visible position of a pixel and transmit a ray of a second polarization direction.

Therefore, when the first frame is being displayed, a line on which the right eye image is displayed is shifted to a position under one line to be recognized by the right eye of the viewer, and a line on which the left image is displayed is recognized in its original position by the left eye of the viewer. As a result, a vertical disparity disappears.

If the left and right eyes of the viewer view only odd lines of the left and right eye images corresponding to the left and right eyes of the viewer, there is no image to be viewed when a frame is constituted as shown in upper drawings of FIG. 5. Therefore, one of left and right eye images is arranged on an upper or lower line in one frame to appropriately constitute the frame.

When the first frame is displayed, and then the second frame is displayed, the controller 110 blocks the driving signal applied to the first and second polarization switches 107 and 106 to change a polarization direction of a penetrating ray into a vertical direction. As the polarization direction is changed, the first double refractor 109 refracts a ray, and the second double refractor 108 transmits a ray. Therefore, the left eye of the viewer recognizes a left eye image on an upper line, and the right eye of the viewer recognizes a right eye image in an original position.

The eyeglasses 200 may be designed so that the second double refractor 108 of the right eye filter is realized to refract a ray downwards, and the first refractor 109 of the left eye filter is realized to refract a ray upwards.

Accordingly, remaining left and right eye image parts excluded from the frame may be viewed without a vertical disparity. Therefore, the viewer may feel a stereoscopic effect with maintaining a full resolution.

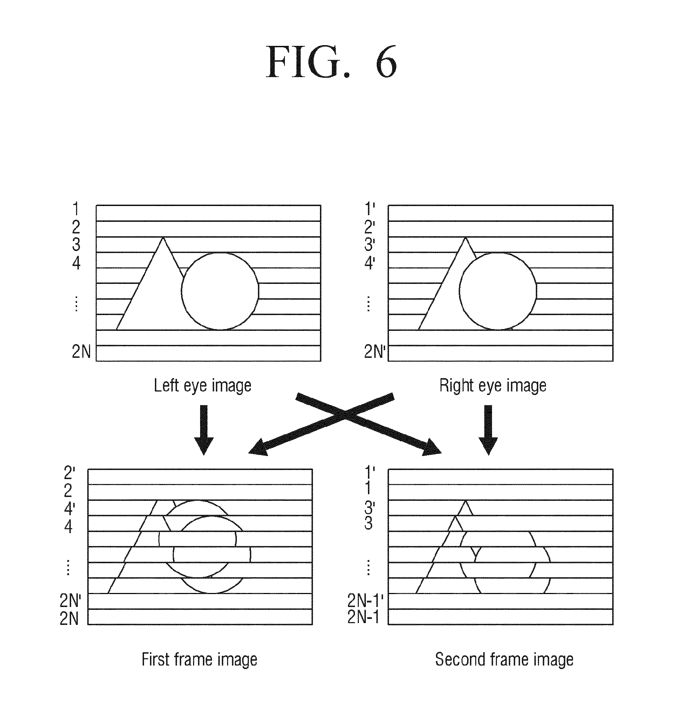

FIG. 6 is a view illustrating a method of constituting first and second frames.

Referring to FIG. 6, a left eye image is divided into lines 1, 2, 3, .., and 2N, and a right eye image is divided into lines 1', 2', 3', ..., and 2N'.

Even lines 2' 4', 6' ,..., and 2N' of the right eye image are arranged on odd lines of the first frame, and even lines 2, 4, 6, ..., and 2N of the left eye image are arranged on even lines of the first frame.

Odd lines i', 3', 5', ..., and 2N-1' of the right eye image are arranged on odd lines of the second frame, and odd lines 1, 3, 5, ..., and 2N-1 of the left eye image are arranged on odd lines of the second frame. Therefore, the first and second frames each have a form in which the left and right eye images are alternately arranged.

The controller 110 synchronizes with a timing when the first and second frames are displayed to control the first and second polarization switches 107 and 106. If a ray emitted from the picture element 102 corresponding to an odd line of the display panel 101 has a first polarization direction, and the first polarization switch 107 is driven, the ray is converted into a ray of a second polarization direction through the first polarization switch 107. The first double refractor 109 transmits the ray of the second polarization direction. Therefore, the left eye of the viewer recognizes the even lines 2, 4, 6, ..., and 2N of the left eye image corresponding to even lines of the firs frame.

If a ray emitted from the picture element 103 corresponding to an even line of the display panel 101 has a second polarization direction, and the second polarization switch 106 is driven, the ray of the second polarization direction is converted into a ray of a first polarization direction through the second polarization switch 107. The second double refractor 108 refracts the ray of the first polarization direction toward a lower line. Therefore, the right eye of the viewer recognizes even lines 2', 4', 6', ..., and 2N' of the right eye image, which have been displayed on odd lines of the display panel 101, in even line positions of the display panel 101.

In the case of the second frame, the first double refractor 109 refracts a ray, and the second double refractor 108 transmits a ray. Therefore, odd lines of the left eye image are shifted and then recognized in odd line positions by the left eye of the viewer, and even lines of the right eye image are recognized in original positions by the right eye of the viewer.

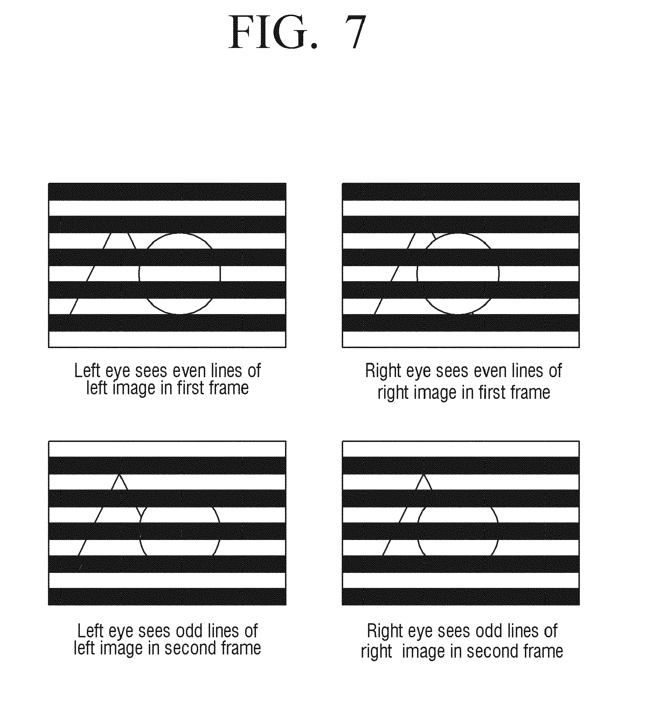

FIG. 7 is a view illustrating a form of an image recognized by left and right eyes of a user when first and second frames combined as shown in FIG. 6 are displayed.

Referring to FIG. 7, when the first frame is displayed, a ray emitted from even lines of the first frame penetrates the first double refractor 109. Therefore, even lines of a left eye image are recognized in their original positions. A ray emitted from odd lines of the first frame is refracted through the second double refractor 108 and thus its visible position is shifted to a lower line. Therefore, odd lines of the first frame are recognized as being positioned on even lines by the right eye of the user.

When the second frame is displayed, a ray emitted form even lines of the second frame is refracted through the first double refractor 109 and thus its visible position is shifted to an upper line. Therefore, even lines of the second frame are recognized as being positioned on odd lines by the left eye of the user. A ray emitted from odd lines of the second frame penetrates the second double refractor 108. Therefore, odd lines of the second frame are recognized as being positioned in their original positions by the right eye of the user.

Therefore, when the first and second frames are sequentially displayed, even and odd lines of the left eye image are sequentially recognized by the left eye of the user, and even and odd lines of the right eye image are sequentially recognized by the right eye of the user. Therefore, the user views the left and right eye images with maintaining a full resolution.

As described above, according to the exemplary embodiment of the present general inventive concept, left and right eye images are displayed by different pixel sets. This indicates that if a pixel response time is not sufficiently short as in an LCD display, there is no pixel switching between left and right eye images causing stereoscopic crosstalk. In other words, according to the above-described exemplary embodiment, crosstalk between left and right eye images may be prevented.

Instead of preventing crosstalk, contrast may decrease in a minute part of an image and a blur may occur in the minute part of the image. The crosstalk between the left and right eye images may appear as crosstalk between odd and even lines. However, this blur is not well distinguished by eyes of a user.

A contrast decrease occurring in a detailed area of an image may be solved through an operation of inserting a black frame in the display apparatus 100. In other words, the display apparatus 100 may output a black frame once in the unit of the predetermined number of frames.

Alternatively, the display apparatus 100 may perform a backlight scanning operation of scanning and blinking backlight on a whole surface of the display panel 101. Therefore, a decrease in contrast may be prevented.

If two frames are constituted as described above, the display apparatus 100 makes an output frequency faster than an original output frequency. For example, if the original output frequency is 60 Hz, the display apparatus 100 sequentially outputs first and second frames by a cycle of 8.33 ms according to a frequency of 120 Hz. This frequency is only an example and may be differently set according to exemplary embodiments. In other words, a TV system complying with PAL standards may reduce a frame frequency to 50 Hz similarly to a conventional CRT TV to prevent a flicker phenomenon of an image line.

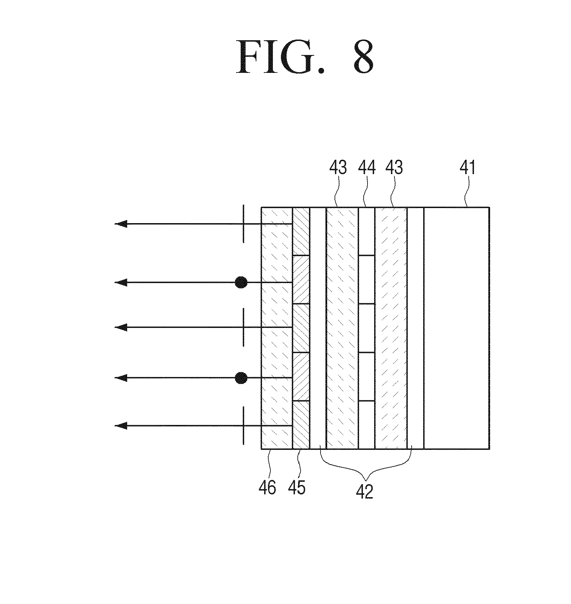

FIG. 8 is a view illustrating a structure of the display panel 101 according to an exemplary embodiment of the present general inventive concept. In detail, FIG. 8 illustrates the structure of the display panel 101 using an LCD.

Referring to FIG. 8, the display panel 101 includes a backlight unit 41, a polarizer 42, an LCD panel substrate 43, a liquid crystal cell layer 44, a retarder pattern layer 45, a retarder substrate 46.

The retarder pattern layer 45 and the retarder substrate 46 correspond to polarized crystal layers as described above.

A ray provided from the backlight unit 41 penetrates the liquid crystal layer 44 to include an image and penetrates the retarder pattern layer 45 and the retarder substrate 46 to be divided into a ray of a first polarization direction (marked with " | ") and a ray of a second polarization direction (marked with "●"). The ray of the first polarization direction is emitted through the picture element 102 of the odd lines of the display panel 101, and the ray of the second polarization direction is emitted through the picture element 103 of the even lines of the display panel 101.

A retarder pattern is used in FIG. 8, but a patterned polarizer may be applied so that the two types of picture elements 102 and 103 change polarization directions. In the present specification, a polarized crystal layer may be referred to as a polarization modifying panel.

If the display panel 101 using an LCD or an OLED uses a retarder pattern, a light loss may be minimized. Also, in the above-described exemplary embodiments, odd and even lines are horizontal lines which horizontally extend but may be realized as vertical lines. These lines are uniformly distributed.

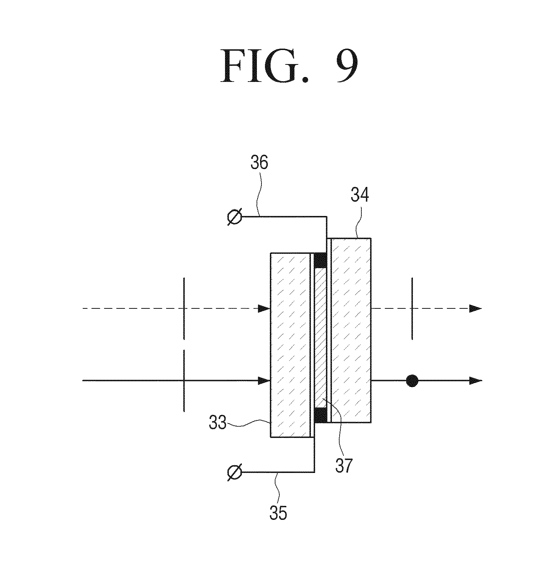

FIG. 9 is a view illustrating a structure of a polarization switch according to an exemplary embodiment of the present general inventive concept.

Referring to FIG. 9, the polarization switch includes two transparent electrodes 35 and 36, an electro-optic material 37, and transparent substrates 33 and 34.

The electro-optic material 37 is disposed on the two transparent electrodes 35 and 36. A liquid crystal may be used as the electro-optic material 37, the transparent substrates 33 and 34 seal the two transparent electrodes 35 and 36 and the electro-optic material 37. If the liquid crystal is used, and a driving voltage is not applied to the transparent electrodes 35 and 36, a polarization direction of an incident ray is changed to a vertical direction and then emitted. If the driving voltage is applied to the transparent electrodes 35 and 36, the incident ray penetrates the transparent electrodes 35 and 36 without changing the polarization direction of the incident ray.

FIG. 10 is a view illustrating an operation of a left eye filter of eyeglasses.

Referring to FIG. 10, rays of a first polarization direction (marked with " | ") are emitted from odd lines I, III, V, ... of the display panel 101, and rays of a second polarization direction (marked with "●") are emitted from even lines II, IV, VI, ... of the display panel 101.

A first polarizer 105 transmits only one of rays of first and second polarization directions according to design.

In FIG. 10, rays of a second polarization direction are transmitted. In other words, the first polarizer 105 transmits only rays of lines II, IV, and VI.

The rays of the second polarization direction having penetrated the first polarizer 105 may penetrate the first polarization switch 107 so as to maintain their polarization directions due to a switching operation of the first polarization switch 107 or may be converted into rays of a first polarization direction.

The rays whose polarization directions have been changed into the first polarization direction are refracted upwards through the first double refractor 109. Rays maintaining the second polarization direction penetrate the first double refractor 109. Therefore, when first and second frames are displayed, a full resolution left eye image may be recognized by a left eye 207.

The controller 110 may control a driving voltage generator 204 and a switch 208 which are connected to the first polarization switch 107. If the switch 208 is turned off, the first polarization switch 107 changes a polarization direction. If the switch 208 is turned on, the first polarization switch 107 does not change the polarization direction.

In other words, if a horizontally polarized ray penetrating the first double refractor 109 is an ordinary ray in FIG. 10, the switch 208 is turned on when frame M in which a left eye image is arranged on even lines is displayed. A user may view lines II, VI, VIII, .... In FIG. 10, rays recognized through the lines II, VI, VIII, ... are indicated by thick lines.

If the frame M is changed into next frame M+1 including odd lines of the left eye image, the switch 208 is turned off according to this. The first polarization switch 107 changes horizontally polarized rays into vertically polarized rays corresponding to extraordinary rays. The extraordinary rays are indicated by thin lines. The extraordinary rays are refracted through the first double refractor 109 and then recognized by the left eye 207.

As a result, an image of picture elements II, VI, VIII, ... of even lines of the display panel 101 is recognized by the left eye 207.

A left eye image which is recognized for two frame periods is almost equal to an original image. If a refresh rate is sufficiently great, two interlace fields are recognized as one image having a full resolution. Since a conventional National Television System Committee (NTSC) TV transmits graphic contents at a field refresh rate of 60 Hz, a real refresh rate of each image line is 30 Hz. In this case, some people may feel a flicker in an interlaced image, and thus a field frequency may be set to a value higher than 60 Hz.

FIG. 11 is a view illustrating an operation of a right eye filter. The right eye filter includes a second polarizer 104, a second polarization switch 106, and a second double refractor 108. As a result, an image of rays emitted from odd lines I, III, V, ... of the display panel 101 is recognized by a right eye 217.

The second polarization switch 106 maintains or changes polarization directions according to a control of the controller 110. The second double refractor 108 may be designed to be equal to the first double refractor 109 installed in the left eye filter or may be rotated 180°. Therefore, the first double refractor 109 refracts rays upwards, and the second double refractor 108 refracts rays downwards.

This operation will now be described. Rays emitted from even lines II, VI, VIII, ... are blocked by the second polarizer 104, and only rays emitted from odd lines I, III, V, ... are incident onto the second polarization switch 106.

When the frame M is displayed, the controller 110 turns on a switch 218 connected to the second polarization switch 106. Therefore, a driving voltage generator 214 applies a driving signal to the second polarization switch 106. The second polarization switch 106 driven by the driving signal maintains polarization directions of rays emitted from the odd lines I, III, and VI, ... of the display panel 101. Rays which have penetrated the second polarization switch 106 are refracted downwards through the second double refractor 108. Trajectories of rays for the frame M are shown by thick lines.

If the frame M is changed into next frame M+1 including odd lines of a right eye image and then displayed, the controller 110 turns off a switch 218 connected to the second polarization switch 106 to block the driving signal. Therefore, the second polarization switch 106 changes polarization directions of rays. The rays having the changed polarization directions penetrate the second double refractor 108 and then are incident onto the right eye 217. Therefore, when the frames M and M+1 are displayed, a right eye image having a full resolution is recognized by the right eye 217.

In the above-described exemplary embodiments, two polarization switches are used. However, one polarization switch having an enough width to cover left and right eyes may be used.

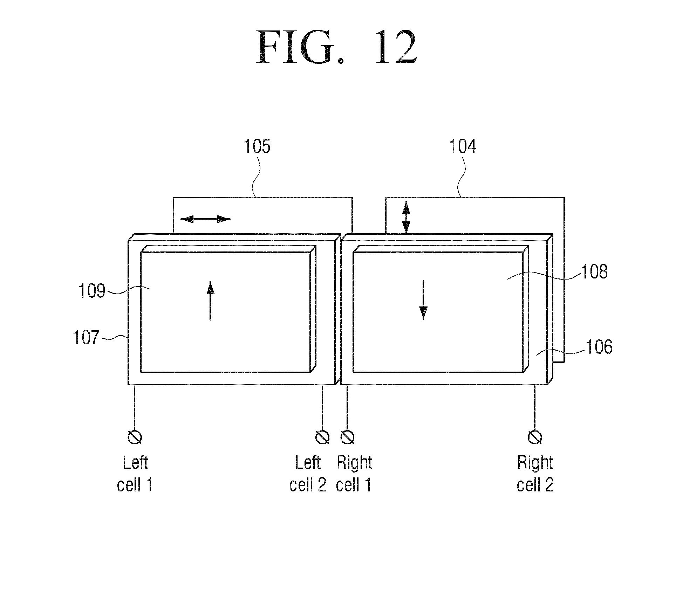

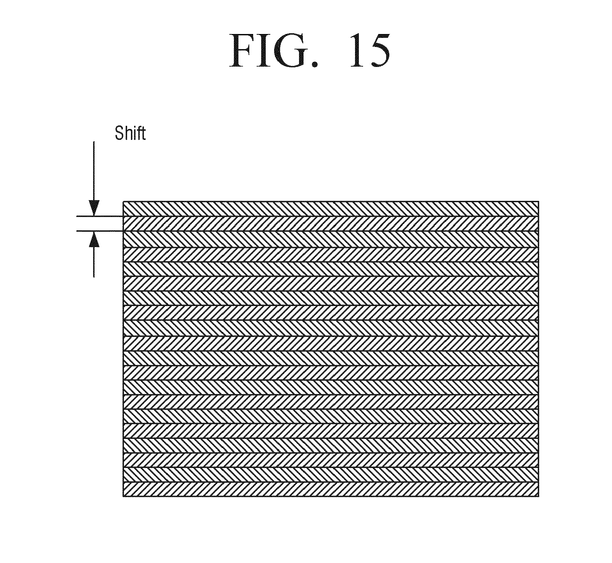

FIGS. 12 and 15 are views illustrating various structures of polarization switches according to exemplary embodiments of the present general inventive concept.

FIG. 12 is a view illustrating elements of a left eye glass and elements of a right eye glass which are completely separated. Referring to FIG. 12, the first and second polarizers 105 and 104 are separated from each other to be arranged side by side. The first polarizer 105 transmits rays of horizontal polarization directions, and the second polarizer 104 transmits rays of vertical polarization directions.

First and second polarization switches 107 and 106 are respectively disposed at the first and second polarizers 105 and 104, and first and second double refractors 109 and 108 are disposed above the first and second polarization switches 107 and 106. These structures are separated from one another.

Switches and driving voltage generaters for control these may be separately installed to be respectively connected to the first and second polarization switches 107 and 106. One controller 110 may be installed to commonly control the above-mentioned structures or may be separately installed to separately control the above-mentioned structures.

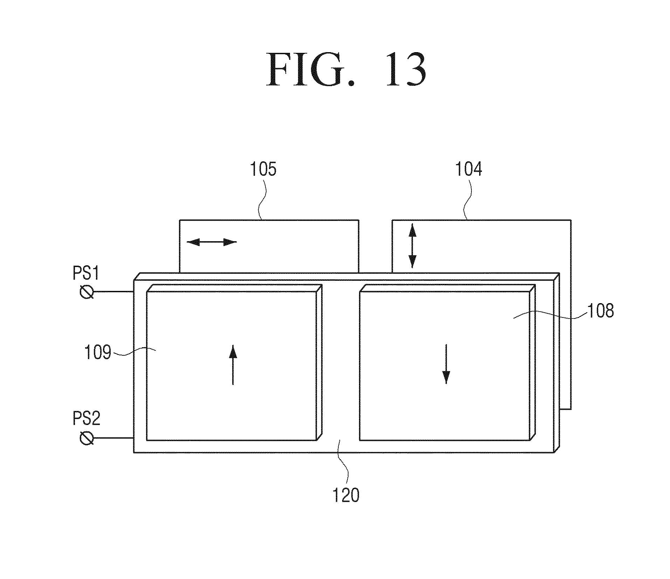

FIG. 13 is a view illustrating a structure using a common polarization switch 120. The common polarization switch 120 may maintain or change polarization directions of rays penetrating the first and second polarizers 105 and 104.

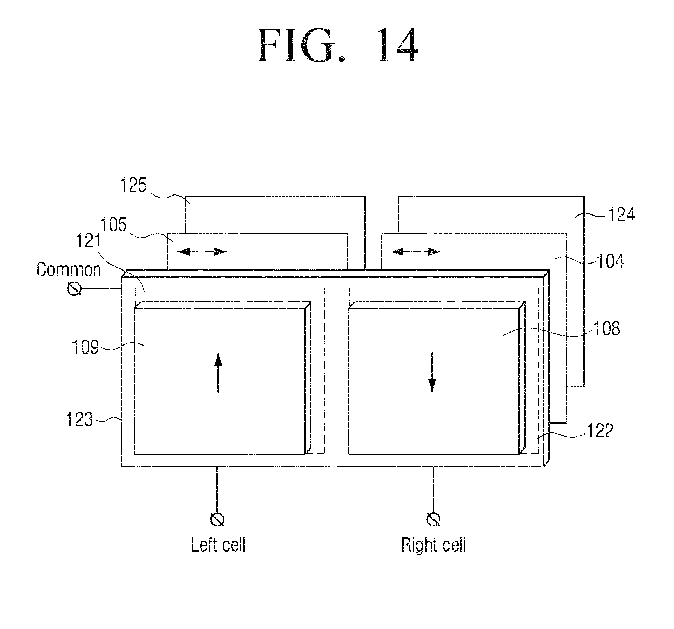

FIG. 14 is a view illustrating a structure using a polarization switch including a common electrode 123 and two individual electrodes 121 and 122.

Referring to FIG. 14, a driving signal may be separately supplied to the individual electrodes 121 and 122 to switch the individual electrodes 121 and 122. The individual electrodes 121 and 122 respectively correspond to left and right eyes.

In the exemplary embodiment of FIG. 14, a left eye quarter wave plate (or film) 125 and a right eye quarter wave plate (or film) 124 are shown. For example, if first and second polarization directions are left-circular and right-circular polarization directions, the left and right eye quarter wave plates 125 and 124 convert circularly polarized signals into linearly polarized signals.

These plates may be installed in eyeglasses structures of FIGS. 12 and 13. These plates may be realized as polymer thin films which are combined with external surfaces of the first and second polarizers 104 and 105. If quarter wave plates are applied, the first and second polarizers 105 and 104 may be arranged to be parallel with each other so as to be vertical to output polarized rays of an LCD panel. If the quarter wave plates 125 and 124 are provided, odd lines may be appropriately separated from even lines and then may be recognized by left and right eyes. The quarter wave plates 125 and 124 may compensate for double refraction phenomenon of double refraction elements of retarder patterns.

The above-described elements may be combined with one another or may be changed to be applied to eyeglasses. These combinations may be differently determined according to various combinations of frames in the display apparatus 100.

Polarized patterns of the display apparatus 100 may be realized in various forms.

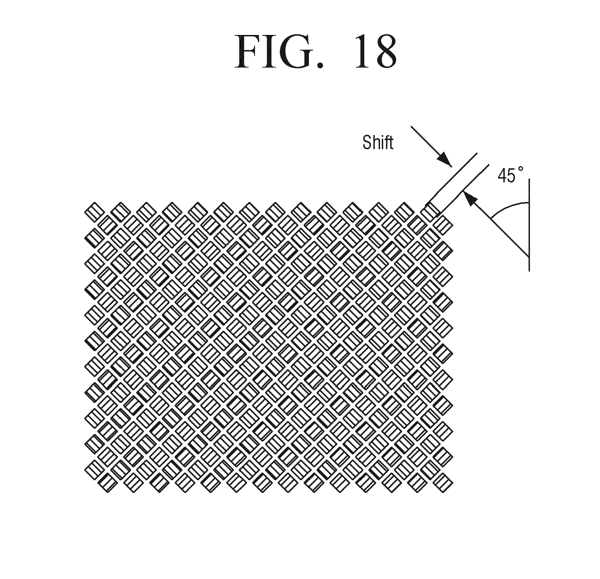

FIGS. 15 and 18 are views illustrating polarized patterns according to various exemplary embodiments of the present general inventive concept.

These polarized patterns may be variously designed according to whether thicknesses of display cells defining pixel structures are thicker than pixel pitches.

FIG. 15 illustrates horizontal polarization patterns realized to have the same polarized rays in a horizontal line direction. If the horizontal polarization patterns have the same horizontal polarized rays in the horizontal direction, visible positions of pixels are shifted upwards or downwards. A viewing angle further widens in the polarization patterns.

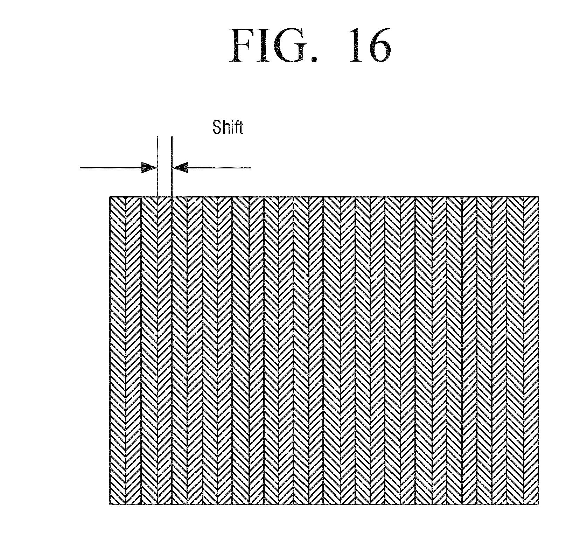

FIG. 16 illustrates vertical polarization patterns realized to have the same polarized rays in a vertical line direction. In the case of vertical polarization patterns, visible positions of pixels are shifted to the left or right.

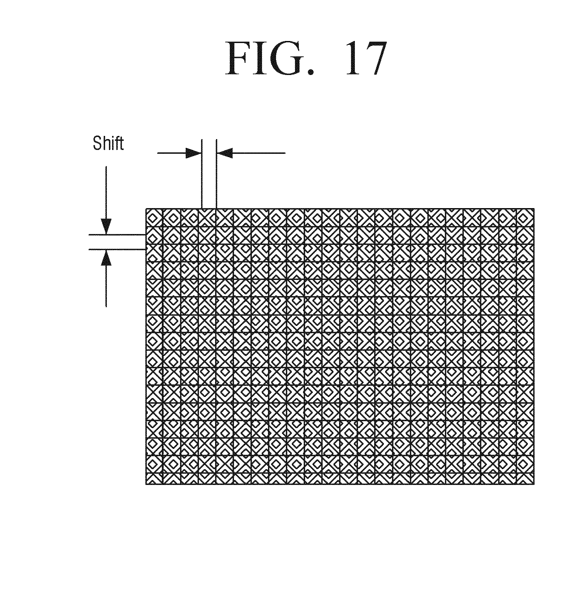

FIG. 17 illustrates a checkerboard polarization pattern. The checkerboard polarization pattern is compatible with horizontal or vertical shift eyeglasses. The checkerboard polarization pattern is convenient to change a display without replacing eyeglasses in order to display both a landscape and a portrait.

FIG. 18 illustrates a checkerboard structure having a diamond shape. A polarization pattern of FIG. 18 is compatible with a pixel structure of a DLP projection display. Referring to FIG. 18, the checkerboard structure has a shape which is rotated 45°. Therefore, a polarization direction is also rotated 45°.

In FIGS 12 through 14, visible positions of pixels constituting an image are shifted upwards or downwards in a vertical direction. However, a direction and an amount of shift may be determined differently from this.

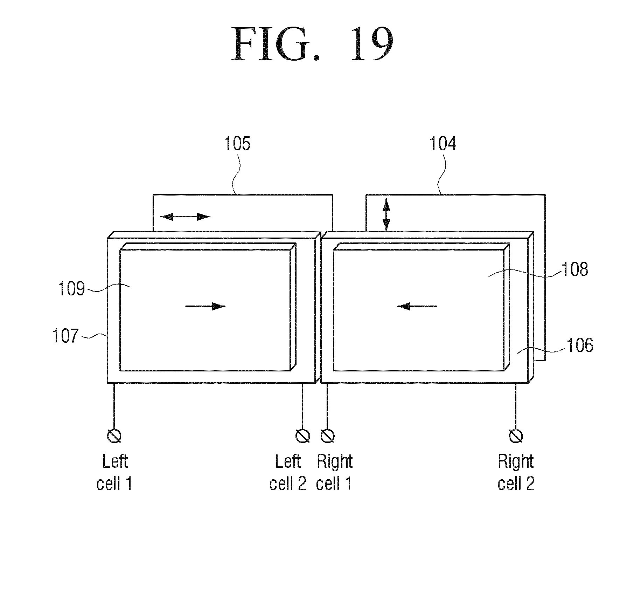

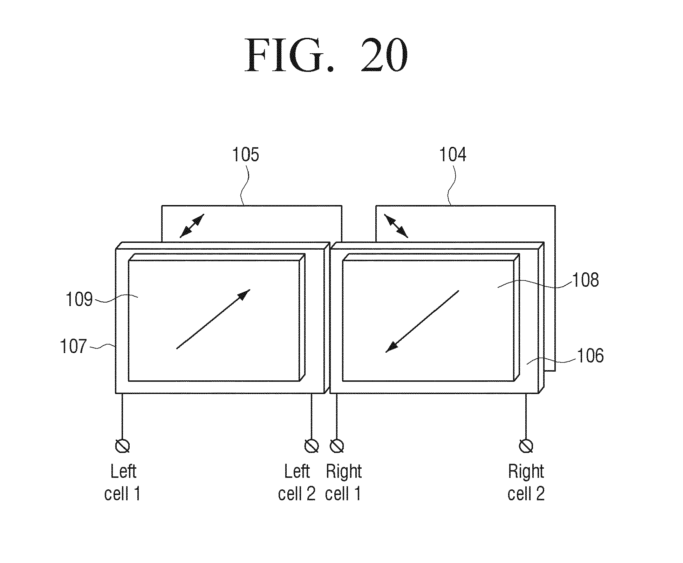

FIG. 19 illustrates a structure which is shifted in a horizontal direction, and FIG. 20 illustrates a structure which is shifted in an orthogonal direction.

In other words, if polarizers, polarization switches, and double refractors of eyeglasses are rotated to be appropriately designed according to a polarization pattern of the display apparatus 100, an image may be shifted in horizontal and orthogonal directions as shown in FIGS. 19 and 20.

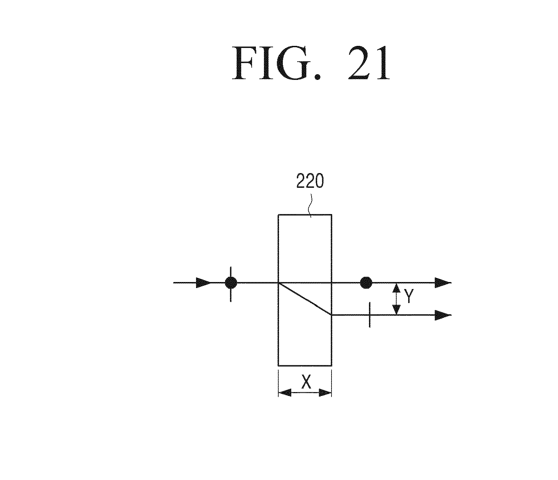

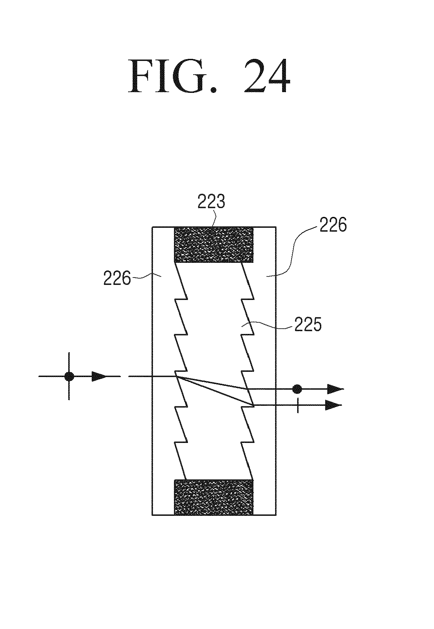

FIGS. 21 and 24 are views illustrating a structure of a double refractor according to various exemplary embodiments of the present general inventive concept.

Referring to FIG. 21, a plano-parallel plate formed of a birefringent material may be realized as a double refractor. The plano-parallel plate may refract incident rays to output parallel rays which are paratactically shifted from transmitted rays. Although rays of first and second polarization directions are incident onto the same place in FIG. 21, the rays are emitted as parallel rays which keep distance Y. This type of double refractor is known as a beam displacer or a beam shifter. Calcite, lithium niobate, quartz, sapphire, yttrium vanadate, or the like may be used as a birefringent material. Thickness X of the plano-parallel plate may be appropriately set to acquire desired value Y. For example, it is assumed that a pixel pitch of an LCD panel is 0.3 mm, and a pitch of retarder pattern is 0.6 mm, and a distance between parallel rays is 0.3 mm. If a double refraction plate is formed of calcite, incidence and emission surfaces of the calcite may be made inclined in order to maximize a shift distance, i.e., a displacement. In detail, the calcite may be designed to have a surface inclined at an angle of 48° from an optical axis of the calcite. In the case of the calcite, a displacement factor related to a horizontal offset of a plate thickness is about 0.11. This indicates that if the plate thickness is about 0.3/0.11=2.7 mm, an optical shift effect of 0.3 mm may be obtained.

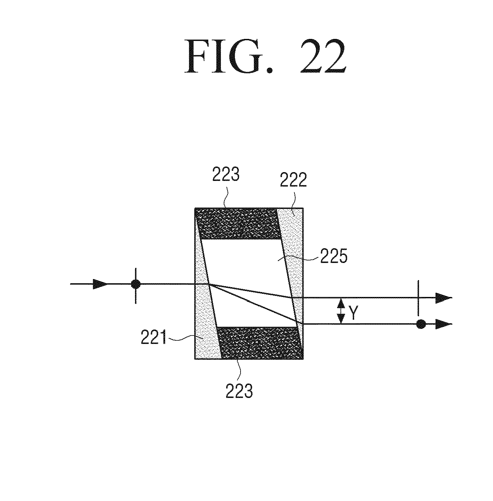

According to another exemplary embodiment, two or more wedges may be used to paratactically shift visible positions. At least two of these wedges are formed of a refringent material. Exemplary embodiments of combining wedges are shown in FIGS. 22, 23, and 24.

In FIG. 22, two double refraction wedges 221 and 222 are used. The two double refraction wedges 221 and 222 change a direction of an incident ray based on a polarized ray. The two double refraction wedges 221 and 222 are formed of the same birefringent material and have the same angle. The two double refraction wedges 221 and 222 keep a predetermined distance due to a spacer 223. A gap 225 between the two double refraction wedges 221 and 222 may be filled with air or a transparent isotropic material.

These double refraction optical elements refract all of rays of first and second polarization directions but emit parallel rays which keep a distance Y due to different refraction degrees.

If it is difficult to realize this shift, two Rochon prisms may be used. The Rochon prisms refer to two prisms which are paired to stick to each other so that optical axes are perpendicular to each another.

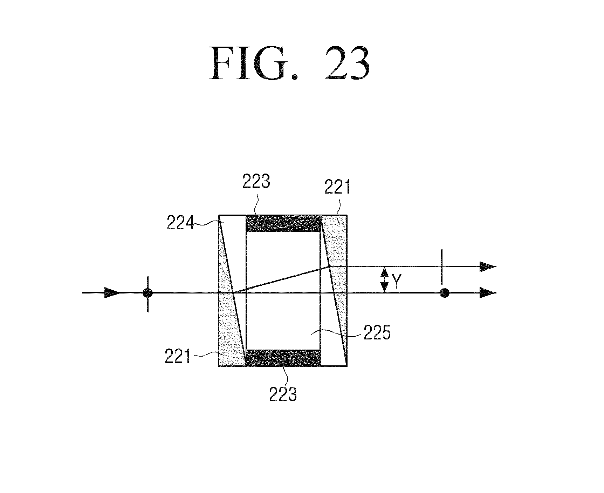

FIG. 23 illustrates a structure using Rochon prisms.

Referring to FIG. 23, each of the Rochon prisms is formed of a combination of two wedges 221 and 224. The two wedges 221 and 224 are formed of birefringnet materials having different optical axes. The two Rochon prisms keep a distance due to a spacer 225, and a gap between the two Rochon prisms may be filled with air or a transparent isotropic material.

FIG. 24 illustrates a structure using two Fresnel prisms 226. The Fresnel prisms 226 also keep a predetermined distance due to a spacer 223, and a gap between the Fresnel prisms 226 may be filled with air or a transparent isotropic material. According to another exemplary embodiment, the Rochon prisms may be replaced with Wollaston prisms.

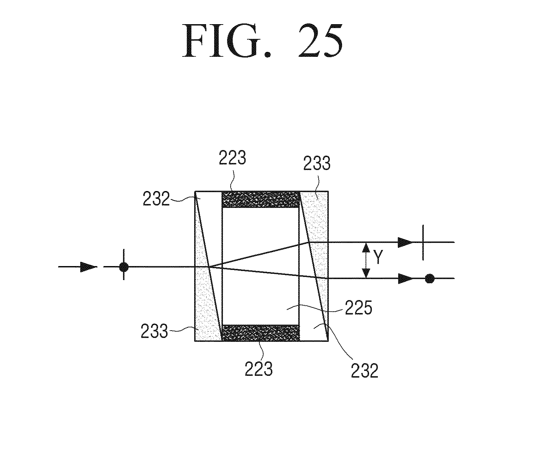

FIG. 25 illustrates a structure of a double refractor using a Wollaston prism.

Referring to FIG. 25, each of the Wollaston prisms includes two wedges 232 and 233 facing each other. The Wollaston prisms keep a distance due to a spacer 223, and a gap between the Wollaston prisms may be filled with air or a transparent isotropic material. Each of wedges of the Wollaston prisms is formed of a birefringent material and refracts two rays of different polarization directions in different directions.

In the above-described exemplary embodiments, rays are refracted to paratactically shift visible positions of pixels but are not necessarily limited to this structure. In other words, an angle of a visual image may be shifted. If Rochon prisms are applied, rays may be refracted at appropriate angles to be shifted to desired visible positions.

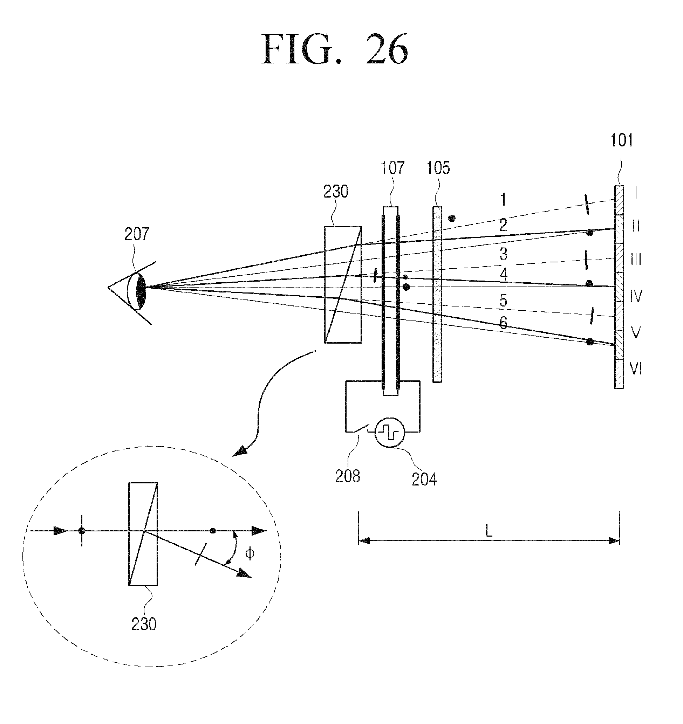

FIG. 26 illustrates the left eye filter of FIG. 10 including a different type of double refractor. In detail, a double refractor 230 using a Rochon prism is applied in the left eye filter of FIG. 26.

If the Rochon prism 230 is used, a visible position of a pixel varies according to an observation distance L and a refraction angle Ψ. In other words, the Rochon prism 230 shifts a visible position of an image in proportion to the observation distance L and the refraction angle Ψ. The refraction angle Ψ may be obtained from a relation of Y/L. For example, if L=1000mm, and a requested shift distance is 0.3 mm, the refraction angle Ψ is calculated as 1.06 (angular minute). Such each displacement may be very small and thus may be seen as a combination of two thin double refraction wedges.

If eyeglasses are used for a display apparatus having an unknown vertical pitch, an image shift varies according to an observation distance. In general, an optimal distance for viewing an image on a display screen refers to a distance at which an angular height of one image line does not exceed a range between 0.5 angular minute and 1 angular minute. A user may enjoy a maximum screen resolution at such a distance. Therefore, if double refraction eyeglasses shift an image line by a range between 0.5 angular minute and 1 angular minute, the user may view a stereoscopic image at an optimal distance from a screen regardless of a pixel pitch. A Rochon prism having an angular height less than 1 angular minute is made very thin. Therefore, double refraction polymer may be used as a material for fabricating a prism. For example, a polymerized liquid crystal may be used.

A Wollaston prism that is another type of double refraction prism may be used.

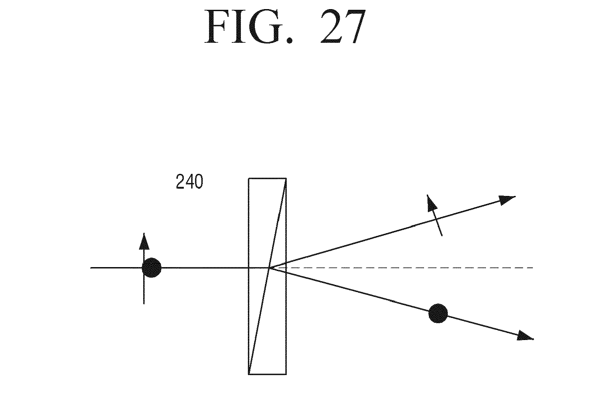

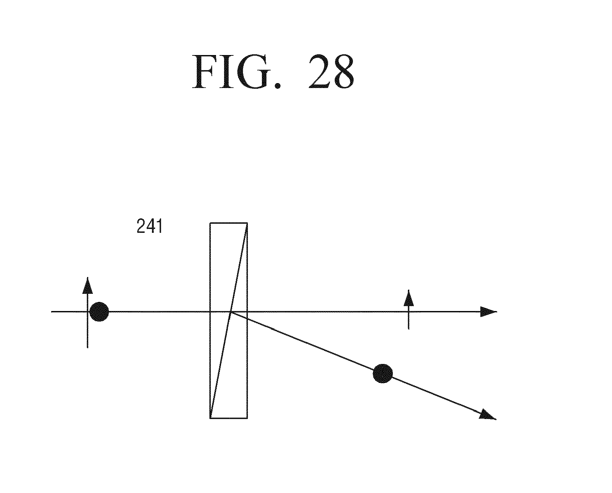

FIGS. 27 and 28 are views illustrating a difference between a Rochon prism and a Wollaston prism. Referring to FIG. 27, a Wollaston prism 240 refracts two rays of different polarization directions in different directions.

A Rochon prism 241 of FIG. 28 transmits one ray (marked with " |") and refracts a ray of a different polarization direction (marked with "●").

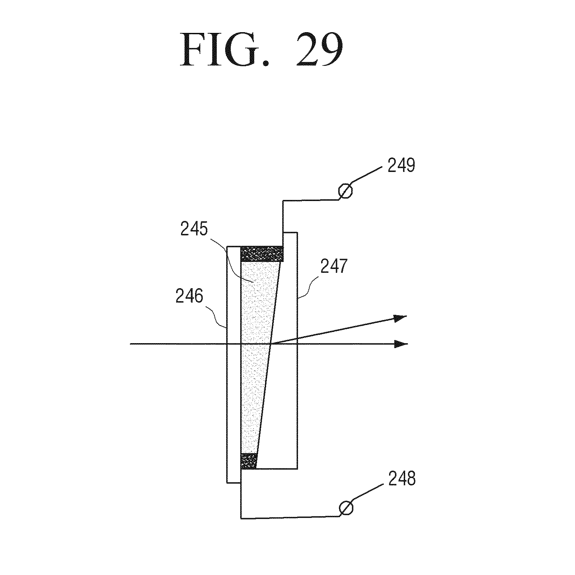

FIG. 29 is a view illustrating a double refractor according to another exemplary embodiment of the present general inventive concept.

Referring to FIG. 29, the double refractor includes a liquid crystal 245, two transparent substrates 246 and 247, and electrode terminals 248 and 249.

The liquid crystal 245 may be realized as a wedge which is arranged between the two transparent substrates 246 and 247. The two transparent substrates 246 and 247 may be formed of a transparent conductive layer such as Indium Tin Oxide (ITO). The transparent substrate 247 may be realized as a wedge to compensate for a refraction surface of a liquid crystal. The transparent substrate 247 may be formed of a glass material having a refractive index similar to a refractive index of the liquid crystal. Refractive angles of these refractive elements may be controlled by a voltage applied between the electrode terminals 248 and 249.

According to the above-described various exemplary embodiments, a polarization switch and a double refractor may be used to reduce crosstalk between lines and view a stereoscopic image having an original resolution.

A display method according to an exemplary embodiment of the present general inventive concept may include a displaying operation and an eyeglasses controlling operation.

In the displaying operation, the display apparatus 100 generates first and second frames in which pixel groups of a left eye image and pixel groups of a right eye image are alternately arranged and sequentially displays the first and second frames.

In the eyeglasses controlling operation, the eyeglasses 200 synchronizes with a display timing of the display apparatus 100 to appropriately control a polarization switch , so that rays of the pixel groups of left eye images of first and second frames are recognized by a left eye, and rays of pixel groups of right eye images of the first and second frames are recognized by a right eye. If a polarization direction is adjusted by a control, and a refraction state is adjusted according to the polarization direction, left and right eye images having full resolutions may be respectively recognized by left and right eyes of a user.

According to various exemplary embodiments of the present general inventive concept, a user may reduce crosstalk between images and view a 3D image with maintaining an original state of a resolution of the 3D image.

The detailed descriptions of this method are the same as those of the above-described various exemplary embodiments, and thus repeated descriptions will be omitted. An illustration of a flowchart will also be omitted.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A stereoscopic display system comprising:
a display apparatus in which first and second pixel elements are alternately arranged, wherein the first pixel element emits a ray of a left eye image in a first polarization direction, and the second pixel element emits a ray of a right eye image in a second polarization direction; and
eyeglasses which comprise left and right eye filters,
wherein the eyeglasses comprise:
a polarizer which separates the rays of the left and right eye images from each other;
a polarization switch which switches a polarization direction of a ray;
a double refractor which shifts a visible position of a pixel according to a polarization state of the ray switched by the polarization switch; and
a controller which operates with an operation of the display apparatus to control the polarization switch.

2. The stereoscopic display system of claim 1, wherein the double refractor comprises at least one plano-parallel plate which is formed of a birefringent material and has a preset thickness.

3. The stereoscopic display system of claim 1, wherein the double refractor comprises at least one wedge or Rochon prism which is formed of a birefringent material and has a preset angle.

4. The stereoscopic display system of claim 1, wherein the display apparatus comprises:
a display panel; and
a polarization modifying panel which has a preset structure to change a polarization direction,
wherein the polarization modifying panel comprises one of a patterned retarder, a patterned polarizer, a checkerboard structure, and a checkerboard structure which is rotated 45° to have a diamond shape.

5. The stereoscopic display system of claim 1, wherein:
the polarizer comprises first and second polarizers which are respectively installed in the left and right eye filters to transmit rays of different polarization directions;
the polarization switch comprises first and second polarization switches which are respectively installed in the left and right eye filters to respectively adjust polarization directions of rays penetrating the first and second polarizers; and
the double refractor comprises first and second double refractors which are respectively installed in the left and right eye filters to refract or transmit rays penetrating the first and second polarization switches according to polarization directions.

6. The stereoscopic display system of claim 5, wherein the first and second polarization switches respectively comprise retarders which are electrically controllable.

7. The stereoscopic display system of claim 5, wherein the first and second polarization switches comprise a retarder which is commonly used for left and right eyes and is electrically controllable.

8. The stereoscopic display system of claim 5, wherein the first and second polarization switches comprise a retarder which is commonly used for left and right eyes and is electrically controllable,
wherein the retarder comprises a common electrode and two individual electrodes.

9. A display method of a stereoscopic display system using eyeglasses comprising left and right eye glasses, the display method comprising:
generating first and second frames in which left and right eye images are alternately arranged and sequentially displaying the first and second frames; and
controlling a polarization switch of the eyeglasses according to a display timing of the first and second frames to refract or transmit rays through the left and right eye glasses so that a left eye of a user recognizes a ray of left eye images of the first and second frames, and a right eye of the user recognizes a ray of right eye images of the first and second frames.

10. Eyeglasses for viewing a stereoscopic image, the eyeglasses comprising:
first and second polarizers which transmit rays of different polarization directions;
first and second double refractors which respectively adjust refracted states of the rays having penetrated the first and second polarizers to shift visible positions of pixels;'
first and second polarization switches which switch states of the first and second double refractors; and
a controller which operates with an operation of the display apparatus to control the first and second polarization switches.

11. The eyeglasses of claim 10, wherein the first and second double refractors each comprise at least one plano-parallel plate which is formed of a birefringent material and has a preset thickness.

12. The eyeglasses of claim 10, wherein the first and second double refractors each comprise at least one wedge or Rochon prism which is formed of a birefringent material and has a preset angle.

13. The eyeglasses of claim 10, wherein the first and second polarization switches respectively comprise retarders which are electrically controllable.

14. The eyeglasses of claim 10, wherein the first and second polarization switches comprise a retarder which is commonly used for left and right eyes and is electrically controllable.

15. The eyeglasses of claim 10, wherein the first and second polarization switches comprise a retarder which is commonly used for left and right eyes and is electrically controllable,
wherein the retarder comprises a common electrode and two individual electrodes.
